# EUROPÄISCHE PATENTSCHRIFT

(11) **EP 1 267 681 B1**
(45) Veröffentlichungstag und Bekanntmachung des Hinweises auf die Patenterteilung: **01.10.2003**
(21) Anmeldenummer: 01917007.5
(22) Anmeldetag: 19.02.2001
(51) Int. Cl.: A47J 29/02

(54) **VORRICHTUNG ZUM KOCHEN VON EIERN OHNE SCHALE**
DEVICE FOR COOKING EGGS WITHOUT THE SHELL
DISPOSITIF POUR FAIRE CUIRE DES OEUFS SANS LA COQUILLE

(30) Priorität: 03.03.2000 DE 10010629
(43) Veröffentlichungstag der Anmeldung: 02.01.2003
(73) Patentinhaber: BSH Bosch und Siemens Hausgeräte GmbH, 81669 München (DE)
(72) Erfinder: KRAMER, Siegmund, 83417 Kirchanschöring (DE); DAMRATH, Joachim, 89429 Bachhagel (DE); FREITAG, Dietmar, 09394 Hohndorf (DE); SCHUFFENHAUER, Andreas, 09113 Chemnitz (DE)
(86) Internationale Anmeldenummer: EP0101846
(87) Internationale Veröffentlichungsnummer: WO01064087

(56) Entgegenhaltungen:
- DE-U- 1 891 125
- US-A- 3 831 508

## Beschreibung

Die Erfindung betrifft eine Vorrichtung zum Kochen von.Eiern ohne Eierschale mittels Wärmestrahlung nach dem Oberbegriff des Anspruchs 1.

Zum Kochen von Eiern in ihrer Schale ist es bekannt, diese im heißen Wasserbad oder in einer Dampfatmosphäre zu kochen. Daneben sind durch die DE 1 429 788, DE 733 36 78 U1, DE 1 869 521 U1, DE 1 891 125 U1 und die US 3,227,065 Eierkocher bekannt, bei denen die Eier mittels einer Strahlungswärme oder konvektiver Wärme abgebenden Heizeinrichtung gekocht werden. Eier ohne Schale werden üblicherweise in Pfannen oder anderen Gefäßen gekocht, die von außen erhitzt werden und die Wärme an den in ihnen enthaltenen Eiinhalt weiterleiten. So ist durch die US 5,203,252 ein Brotröster mit Zusatzfunktionen bekannt, bei dem eine halbkreisförmige pfannenartige Schale von unten beheizt werden kann. Dieses bekannte Verfahren weist insbesondere den Nachteil auf, dass die für das Kochen benötigte Zeit relativ lang sein kann, bis die Wärme auf den Behälter zur Aufnahme des Eis und das darin enthaltene Ei übertragen ist. Weiterhin sind durch die US 3,831,508 Behälter für Eier ohne Schale bekannt, die die Eier vollständig umschließen und in denen sie in einem Ofen, einem Brotröster oder in kochendem Wasser erhitzt werden können. Bei die Eier vollständig einschließenden Behältern ergibt sich jedoch der Nachteil, dass das Ei beim Kochen allseitig an einer Wand anliegt und so eine Form annimmt, die im Gegensatz zu in oben offenen Behältern zubereiteten Eiern unnatürlich und nachteilig aussieht.

Der vorliegenden Erfindung liegt die Aufgabe zugrunde, eine Vorrichtung zum Kochen von Eiern ohne Eierschale der eingangs genannten Art zu schaffen, bei der die Eier schnell und in einer ansprechenden Form zubereitet werden können.

Erfindungsgemäß wird diese Aufgabe durch eine Vorrichtung nach dem unabhängigen Anspruch 1 gelöst.

Die Abschirmung ist dabei mit der Zubereitungsschale so verbunden, dass sie sich mit einem ausreichenden Abstand über der wenigstens eine Einfassung befindet und so den Eiinhalt in der Einfassung gegen die in der Regel von oben kommende Wärmestrahlung abschirmt. Als Material für die Abschirmung können wärmedämmende oder wärmeleitende Stoffe verwendet werden, wobei bei einem gut wärmeleitenden Material wie beispielsweise Metall, die absorbierte Wärmestrahlung in einem gewissen Umfang nach unten an den Eininhalt weitergegeben werden kann. Durch die Wahl des Materials und der Stärke der Abschirmung kann entsprechend der verwendeten Wärmestrahlung und den Gegebenheiten in der Eierkochvorrichtung die Wärmeübertragung an den Eiinhalt beeinflusst werden. Die Einfassung der Zubereitungsschale kann beispielsweise durch auf die Zubereitungsschale aufgesetzte Stege oder ein auf die Zubereitungsschale aufgesetztes Schälchen gebildet werden.

Weitere vorteilhafte Ausführungsformen sind in den Unteransprüchen beschrieben.

Die Zubereitungsschale kann auch so ausgestaltet werden, dass die Einfassung nur einen Teil von ihr bedeckt und die Abschirmung den nicht von der Einfassung bedeckten Teil wenigstens teilweise für direkte Wärmestrahlung freigibt. Auf diese Weise kann die Wärmeübertragung auf den Eiinhalt erhöht werden, indem direkte Wärmestrahlung auf die Bereiche der Zubereitungsschale neben dem Eiinhalt geleitet wird, wobei ein Verbrennen des Eiinhalts an der Oberfläche durch direkte Wärmestrahlung dennoch vermieden wird. Vorteilhafterweise steht der nicht von der Einfassung bedeckte Teil der Zubereitungsschale in wärmeleitender Verbindung mit dem Boden der Einfassung. Auf diese Weise wird die Wärme, die von den Bereichen der Zubereitungsschale neben dem Eiinhalt aufgenommen wird, von unten an den Eiinhalt geleitet, so dass der Kochvorgang beschleunigt wird.

Zur Bildung des Bodens der Einfassung kann ein Teil der Zubereitungsschale verwendet werden, so dass ein Kostenvorteil erzielt werden kann und die Wärme von gegebenenfalls vorhandenen Randbereichen besser in den Boden der Einfassung geleitet wird. In einer besonders einfachen Ausführungsform ist die Einfassung als Vertiefung in der Zubereitungsschale ausgebildet.
Bei einem Eierkochgerät mit einer erfindungsgemäßen Vorrichtung kann oben eine Wärmestrahlungsquelle angeordnet sein, die nach unten auf eine unten angeordnete Zubereitungsschale strahlt, die von einem insbesondere oben angeordneten Drehantrieb unter der Wärmestrahlungsquelle hinwegbewegt wird, wobei zwischen der Wärmestrahlungsquelle und der Zubereitungsschale die Abschirmung angeordnet ist. Durch das Drehen der Zubereitungsschale insbesondere zusammen mit der Abschirmung kann erreicht werden, dass auch eine größere Zubereitungsschale insbesondere mit mehreren Einfassungen von einer kleinen und kostengünstigen Wärmestrahlungsquelle erhitzt werden kann. Als Wärmestrahlungsquelle können vorteilhafterweise handelsübliche und kostengünstige Leuchtmittel wie beispielsweise Halogenbirnen oder Halogenstäbe eingesetzt werden.

Dabei kann die Abschirmung Flügel aufweisen, die den Einfassungen der Zubereitungsschale zugeordnet sind, wobei die Abschirmung drehfest mit der Zubereitungsschale verbindbar ist, um das Abschirmen der einzelnen Einfassungen durch die zugeordneten Flügel sicherzustellen. Zwischen den einzelnen Flügeln hindurch kann die Wärmestrahlung direkt die Zubereitungsschale erwärmen, wodurch der Kochvorgang beschleunigt wird. Wenn die Zubereitungsschale in wärmeleitender Verbindung mit den Einfassungen steht und insbesondere die Einfassungen als Vertiefungen in der Zubereitungsschale ausgebildet sind, wird die Wärme vorteilhafterweise von den direkt von der Wärmestrahlung erwärmten Randbereichen der Zubereitungsschale in die Böden der Einfassungen und somit zum Eiinhalt geleitet. Die Flügel der Abschirmung können dabei klappbar gestaltet sein, um die Zugänglichkeit zu der darunter liegenden Zubereitungsschale und dem darin enthaltenen Eiinhalt zu erleichtern.

Weiterhin kann die Abschirmung einen oder mehrere Ösen oder Durchbrüche aufweisen, in die ein länglicher Gegenstand wie beispielsweise ein Löffelstiel eingeführt werden kann und mit dem die Abschirmung abgenommen werden kann. Auf diese Weise kann ein Benutzer die erhitzte Abschirmung abnehmen, ohne sie mit der Hand berühren zu müssen.

Die Zubereitungsschale und die Abschirmung können herausnehmbar ausgestaltet werden, wobei zusätzlich vorgesehen sein kann, dass in dem Eierkochgerät alternativ zu der Zubereitungsschale und der Abschirmung eine Einrichtung zum Wenden von Eiern mit Schale eingesetzt werden kann, die ebenfalls von dem Drehantrieb angetrieben werden kann. Dazu kann der Drehantrieb mit einem Kupplungsstück versehen sein, mit dem sowohl die Zubereitungsschale und die Abschirmung als auch die Einrichtung zum Wenden von Eiern mit Schale antreibbar sind. Die Einrichtung zum Wenden von Eiern mit Schale kann beispielsweise von einer Scheibe mit Durchbrüchen gebildet werden, in denen die Eier gehalten werden und die in einer Drehbewegung über sternförmig angeordnete Wenderippen geführt wird, so dass die innerhalb der Durchbrüche unter der Scheibe vorstehenden Abschnitte der Eier gegen die Oberkanten der Wenderippen geführt werden, von diesen innerhalb der Durchbrüche etwas angehoben werden und über die Wenderippen abrollen. Bei dieser Ausgestaltung der Eierwendeeinrichtung werden die Eier durch Abrollen über die Wenderippen gedreht und gleichzeitig innerhalb des Eierkochgeräts auf einer Kreisbahn bewegt, so dass die einzelnen Eier unter der Wärmestrahlungsquelle nacheinander hinwegbewegt werden.

Weitere Einzelheiten, Merkmale und Vorteile der Erfindung ergeben sich aus der folgenden Beschreibung eines Eierkochgeräts mit einer erfindungsgemäßen Vorrichtung unter Bezugnahme auf die Zeichnungen. Darin zeigen:
- Fig. 1: eine schematische seitliche Schnittansicht durch das Eierkochgerät mit einem Einsatz zum Kochen von Eiern ohne Schale,
- Fig. 2: eine Draufsicht auf die Zubereitungsschale zum Kochen von Eiern ohne Schale,
- Fig. 3: eine Draufsicht auf die Abschirmung,
- Fig. 4: eine schematische seitliche Schnittansicht durch ein Eierkochgerät mit einer Einrichtung zum Wenden von Eiern mit Schale,
- Fig. 5: eine Draufsicht auf das Unterteil der Einrichtung zum Wenden von Eiern mit Schale und
- Fig. 6: eine Draufsicht auf den oberen Teil der Einrichtung zum Wenden von Eiern mit Schale.

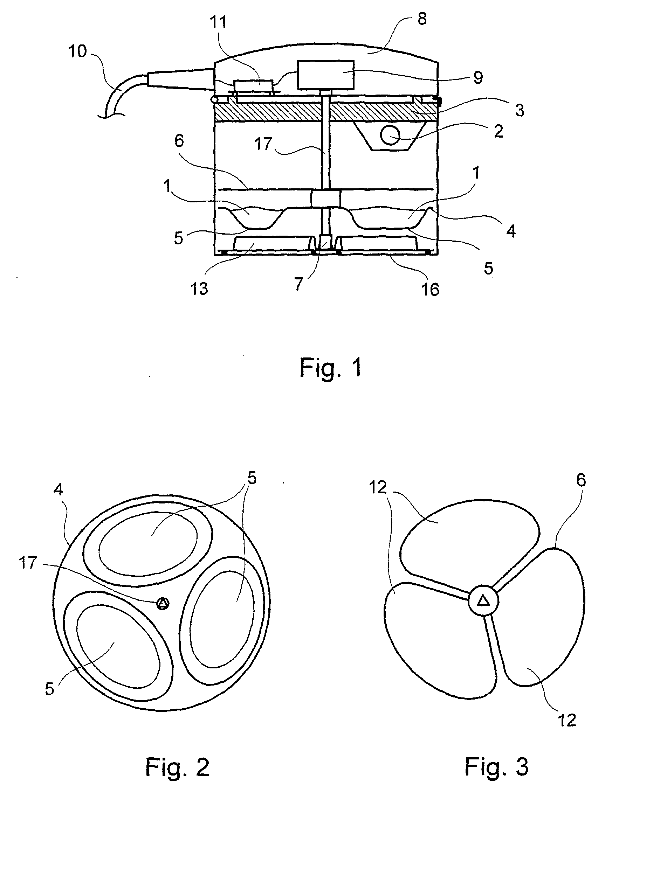

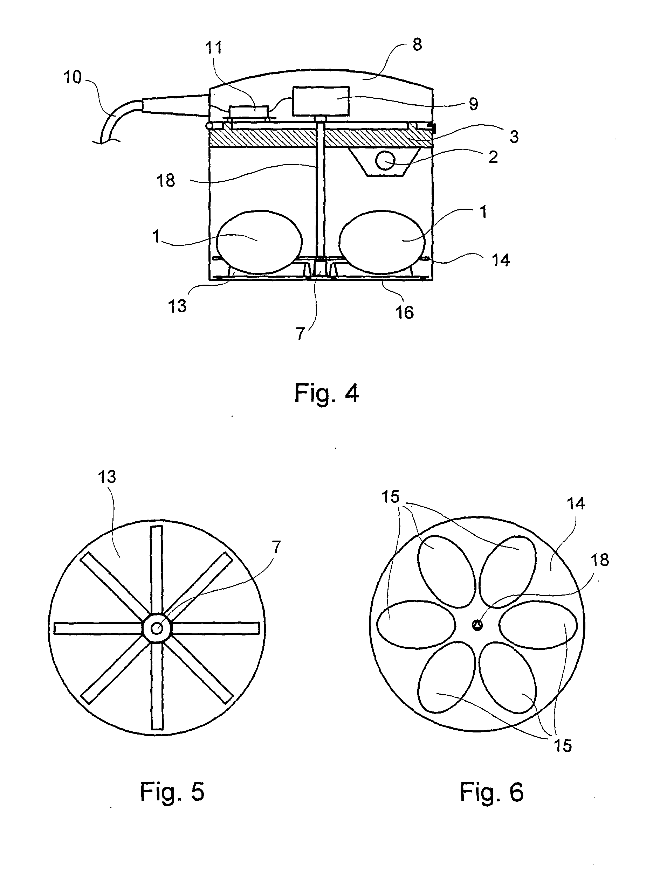

Das in den Fig. 1 und 4 dargestellte Eierkochgerät weist ein Gehäuseunterteil 16, in dem die mit oder ohne Schale zu kochenden Eier 1 angeordnet werden, und ein Gehäuseoberteil 8 auf. Das Gehäuseoberteil 8 umfasst ein elektrisches Anschlusskabel 10 zur Versorgung mit elektrischer Energie, eine Wärmestrahlungsquelle 2 in Form eines Halogenstabes, einen Drehantrieb 9, eine Steuereinrichtung 11 für die Wärmestrahlungsquelle 2 und den Drehantrieb 9 und eine zwischen der Wärmestrahlungsquelle 2 und den übrigen elektrischen Komponenten 9, 10, 11 angeordnete Wärmedämmung 3. Die Achse des Drehantriebs 9 weist ein Kupplungsstück auf, das auf verschiedene Achsen aufsteckbar ist und diese in Drehrichtung antreiben kann.

In der Fig. 1 ist das Eierkochgerät in der Konfiguration zum Zubereiten der Eier 1 ohne Schale dargestellt. Unten am Boden des Gehäuseunterteils 16 ist ein Wendeunterteil 13 angeordnet, das von einer runden Scheibe mit sternförmig darauf angeordneten Wenderippen und einer im Zentrum der Wenderippen angeordneten, nach oben offenen Lagerbuchse 7 gebildet wird. Über dem Wendeunterteil 13 ist eine Zubereitungsschale 4 angeordnet, in der Einfassungen 5 als Vertiefungen zur Aufnahme von Eiern 1 ausgebildet sind. Ferner ist im Zentrum der kreisförmigen Zubereitungsschale 4 eine Achse 17 befestigt, die mit ihrem unten vorstehenden Ende in der Lagerbuchse 7 gelagert wird. Auf dem oberhalb der Zubereitungsschale 4 vorstehenden Ende der Achse 17 ist eine Abschirmung 6 aufgesteckt, die von drei Flügeln 12 entsprechend der drei Einfassungen 5 in der Zubereitungsschale 4 gebildet wird, die mit ihren Wurzeln an einer Nabe befestigt sind, die für einen ausreichenden Abstand der Flügel 12 zu den Eiern 1 und für eine drehfeste Verbindung der Abschirmung 6 mit der Zubereitungsschale 4 in der Weise sorgt, dass sich über jeder Einfassung 5 ein Flügel 12 befindet. Dazu kann die Achse 17 einen Querschnitt in Form eines gleichmäßigen Vielecks mit einer der Anzahl der Einfassungen 5 entsprechenden Anzahl an Ecken besitzen und die Nabe einen Durchbruch mit einem entsprechenden Querschnitt besitzen, um einen Formschluss zwischen der Nabe und Achse 17 herstellen zu können.

Das obere Ende der Achse 17 ist so ausgebildet, dass das Kupplungsstück der Achse des Drehantriebs 9 aufgesteckt werden und die Achse 17 in Drehrichtung antreiben kann. Die drehfeste Verbindung zwischen dem Drehantrieb 9 und der Achse 17 wird beim Auf- bzw. Zuklappen des Gehäuseoberteils 8 selbständig gelöst bzw. hergestellt.

Zum Kochen von Eiern 1 ohne Schale wird das Gehäuseoberteil 8 aufgeklappt oder abgenommen, die Zubereitungsschale 4 mit der Abschirmung 6 an der Achse 7 herausgenommen und die zu kochenden Eier 1 in die Einfassungen 5 eingefüllt, wobei zur Vereinfachung die Abschirmung 6 von der Achse 17 heruntergenommen werden kann. Wenn die Zubereitungsschale 4 mit der Abschirmung 6 wieder in das Gehäuseunterteil 16 eingesetzt und das Gehäuseoberteil 8 heruntergeklappt wird, wird die drehfeste Verbindung zwischen der Achse 17 und dem Drehantrieb 9 hergestellt. Zum Kochen der Eier 1 wird die Wärmestrahlungsquelle 2 und der Drehantrieb 9 eingeschaltet, so dass die Einfassungen 5 mit den darüber liegenden Flügeln 12 der Abschirmung 6 langsam unter der Wärmestrahlungsquelle 2 hinweggedreht werden, wobei die Eier 1 gegen direkte Wärmestrahlung abgeschirmt sind. Direkt von der Wärmestrahlung werden insbesondere die Flügel 12 sowie die zwischen den Flügeln 12 und unter ihnen liegenden Bereiche der Zubereitungsschale 4 erfasst. Die dabei von der Zubereitungsschale 4 aufgenommene Wärme wird innerhalb des Materials der Zubereitungsschale 4, das insbesondere ein gut wärmeleitendes Metall ist, zu den Einfassungen 5 geleitet. Die von den Flügeln 12, die ebenfalls aus einem gut wärmeleitenden Material sein können, aufgenommene Wärme wird nach unten durch Erwärmung der Luft und in geringem Maße durch Wärmestrahlung zu den Eiern 1 weitergegeben.

Bei der Steuerung des Kochvorgangs kann vorgesehen sein, dass die Wärmestrahlungsquelle 2 nicht während der gesamten Dauer in Betrieb ist, und die Eier 1 bei geschlossenem Eierkochgerät und ausgeschalteter Wärmestrahlungsquelle 2 noch eine gewisse Zeit nachgaren. Während dieser Nachgarphase kann der Drehantrieb 9 ein- oder ausgeschaltet sein.

In Fig. 2 ist die Zubereitungsschale 4 mit den ovalen und auf einer Kreisbahn angeordneten Einfassungen 5 zur Aufnahme der Eier 1 dargestellt. In Fig. 3 ist die Abschirmung 6 mit den an der Nabe befestigten Flügeln 12 dargestellt.

In Fig. 4 ist das Eierkochgerät mit den zum Kochen der Eier 1 mit Eierschale nötigen Teilen dargestellt. Dabei ist im Gehäuseunterteil 16 wiederum das Wendeunterteil 13 angeordnet, in dessen Lagerbuchse 7 diesmal aber die Achse 18 eines Eierträgers 14 gelagert ist. Der Eierträger 14 umfasst neben der Achse 18 eine runde Scheibe mit Durchbrüchen 15, in denen die Eier 1 so gehalten werden, dass sie unten vorstehen. Der Abstand des Eierträgers 14 zum Wendeunterteil 13 ist so bemessen, dass beim Drehen des Eierträgers 14 die Eier 1 mit ihren unten vorstehenden Abschnitten gegen die Wenderippen auf dem Wendeunterteil 13 geführt werden, so dass sie von den Wenderippen angehoben werden und innerhalb der Durchbrüche 15 über die Wenderippen hinweg abrollen. Auf diese Weise werden beim Drehen des Eierträgers 14 die Eier um ihre Längsachse gedreht und auf einer Kreisbahn unter der Wärmestrahlungsquelle 2 hinwegbewegt.

In Fig. 5 ist das Wendeunterteil 13 mit den sternförmig angeordneten Wenderippen und der mittig angeordneten Lagerbuchse 7 dargestellt. In Fig. 6 ist der Eierträger 14 mit den Durchbrüchen 15 und der Achse 18 dargestellt, die an ihrem oberen Ende einen Abschnitt aufweist, auf den wie im Fall der Achse 17 der Zubereitungsschale 4 das Kupplungsstück des Drehantriebs 9 aufgesteckt werden kann, um die Achse 18 in Drehrichtung anzutreiben.

Wie im vorangegangenen Fall wird die drehfeste Verbindung zwischen der Achse 18 und der Achse des Drehantriebs 9 beim Auf- bzw. Zuklappen des Gehäuseoberteils 8 selbständig gelöst bzw. hergestellt. Der Eierträger 14 kann an seiner Achse 18 aus dem Gehäuseunterteil 16 herausgenommen werden. Zum Kochen der Eier 1 wird der Drehantrieb 9 und die Wärmestrahlungsquelle 2 eingeschaltet, wodurch die Eier 1 durch Abrollen über die Wenderippen gewendet und unter der Wärmestrahlungsquelle 2 hinwegbewegt werden. Hierbei kann vorgesehen sein, dass der Drehantrieb 9 nach dem Ausschalten der Wärmestrahlungsquelle 2 noch eine gewisse Zeit weiter eingeschaltet bleibt, um die Eier 1 in einer Nachgarphase weiter zu wenden und zu bewegen.
Vorteilhafterweise gibt die Steuereinrichtung 11 am Ende des Kochvorgangs der Eier 1 sowohl mit als auch ohne Schale ein optisches und/oder akustisches Signal ab, um zum Entnehmen und gegebenenfalls auch zum Abkühlen der Eier 1 aufzufordern.

## Patentansprüche

1. Vorrichtung zum Kochen von Eiern (1) ohne Eierschale mittels Wärmestrahlung, mit einer Zubereitungsschale (4) mit wenigstens einer oben offenen Einfassung (5) zur Aufnahme von Eiinhalt, wobei die Vorrichtung eine Abschirmung (6) aufweist, die den zu kochenden Eiinhalt (1) gegen direkte Wärmestrahlung abschirmt, **dadurch gekennzeichnet, dass** die Abschirmung mit der Zubereitungsschale (4) derart verbunden ist, dass sie sich mit einem Abstand über der Einfassung (5) befindet.

2. Vorrichtung nach Anspruch 1, **dadurch gekennzeichnet, dass** die Einfassung (5) nur einen Teil der Zubereitungsschale (4) bedeckt und die Abschirmung (6) den nicht von der Einfassung (5) bedeckten Teil der Zubereitungsschale (4) wenigstens zum Teil für direkte Wärmestrahlung freigibt.

3. Vorrichtung nach Anspruch 2, **dadurch gekennzeichnet, dass** der nicht von der Einfassung (5) bedeckte Teil der Zubereitungsschale (4) in wärmeleitender Verbindung mit dem Boden der Einfassung (5) steht.

4. Vorrichtung nach einem der Ansprüche 1 bis 3, **dadurch gekennzeichnet, dass** der Boden der Einfassung (5) ein Teil der Zubereitungsschale (4) ist.

5. Vorrichtung nach einem der Ansprüche 1 bis 4, **dadurch gekennzeichnet, dass** die Einfassung (5) als Vertiefung in der Zubereitungsschale (4) ausgebildet ist.

6. Eierkochgerät mit einer Vorrichtung nach einem der Ansprüche 1 bis 5 und einer Wärmestrahlungsquelle (2).

7. Eierkochgerät nach Anspruch 6, **dadurch gekennzeichnet, dass** die Wärmestrahlungsquelle (2) von oben nach unten strahlt, und dass das Eierkochgerät einen oben angeordneten Drehantrieb (9) zum Drehen der unten angeordneten Zubereitungsschale (4) zusammen mit der Abschirmung (6) aufweist, die der Einfassung (5) zugeordnet und zwischen ihr und der Wärmestrahlungsquelle (2) angeordnet ist.

8. Eierkochgerät nach Anspruch 6 oder 7, **dadurch gekennzeichnet, dass** die Zubereitungsschale (4) rund ist, mehrere auf einer Kreisbahn angeordnete Einfassungen (5) aufweist und die Abschirmung (6) drehfest mit der Zubereitungsschale (4) verbindbar ist und den Einfassungen (5) jeweils zugeordnete Flügel (12) aufweist.

9. Eierkochgerät nach Anspruch 8, **dadurch gekennzeichnet, dass** die Flügel (12) klappbar sind.

10. Eierkochgerät nach einem der Ansprüche 6 bis 9, **dadurch gekennzeichnet, dass** die Zubereitungsschale (4) und die Abschirmung (6) herausnehmbar sind.

11. Eierkochgerät nach Anspruch 10, **dadurch gekennzeichnet, dass** dem Drehantrieb (6) ein Kupplungsstück zugeordnet ist, mit dem der Drehantrieb (9) alternativ zu der Zubereitungsschale (4) und der Abschirmung (6) eine Einrichtung (13, 14) zum Wenden von Eiern (1) antreiben kann.

12. Eierkochgerät nach einem der Ansprüche 6 bis 11, **dadurch gekennzeichnet, dass** die Abschirmung (6) für die Entnahme mit einem länglichen Gegenstand wenigstens einen Durchbruch oder wenigstens eine Öse aufweist.

## Claims

1. Device for cooking eggs (1) without eggshells, by means of heat radiation, with a preparation bowl (4) with at least one upwardly open surround (5) for the reception of egg content, wherein the device comprises a screen (6) which screens the egg content (1), which is to be cooked, against direct heat radiation, **characterised in that** the screen is connected with the preparation bowl (4) in such a manner that it is disposed at a spacing above the surround (5).

2. Device according to claim 1, **characterised in that** the surround (5) covers only a part of the preparation bowl (4) and the screen (6) frees the part, which is not covered by the surround (5), of the preparation bowl (4) at least partially for direct heat radiation.

3. Device according to claim 2, **characterised in that** the part, which is not covered by the surround (5), of the preparation bowl (4) is disposed in heat-conducting connection with the base of the surround (5).

4. Device according to one of claims 1 to 3, **characterised in that** the base of the surround (5) is a part of the preparation bowl (4).

5. Device according to one of claims 1 to 4, **characterised in that** the surround (5) is formed as a depression in the preparation bowl (4).

6. Egg cooking apparatus with a device according to one of claims 1 to 5 and a heat radiation source (2).

7. Egg cooking apparatus according to claim 6, **characterised in that** the heat radiation source (2) is irradiated from above to below and that the egg cooking apparatus comprises an upwardly arranged rotary drive (9) for rotating the preparation bowl (4), which is arranged below, together with the screen (6), which is associated with the surround (5) and arranged between it and the heat radiation source (2).

8. Egg cooking apparatus according to claim 6 or 7, **characterised in that** the preparation bowl (4) is round and has several surrounds (5) arranged on a circular path and the screen (6) is connectible in rotationally fast manner with the preparation bowl (4) and has blades (12) respectively associated with the surrounds (5).

9. Egg cooking apparatus according to claim 8, **characterised in that** the blades (12) are foldable.

10. Egg cooking apparatus according to one of claims 6 to 9, **characterised in that** the preparation bowl (4) and the screen (6) are withdrawable.

11. Egg cooking apparatus according to claim 10, **characterised in that** a coupling member, by which the rotary drive (9) can drive - alternatively to the preparation bowl (4) and the screen (6) - equipment (13, 14) for the turning of eggs (1), is associated with the rotary drive (6).

12. Egg cooking apparatus according to one of claims 6 to 11, **characterised in that** the screen (6) has at least one passage or at least one eye for removal of an elongate object.

## Revendications

1. Dispositif pour la cuisson d'oeufs (1) sans leur coquille au moyen d'un rayonnement thermique, qui comprend un plateau de préparation (4) avec au moins un creux de réception (5) du contenu des oeufs, ouvert dans le haut, le dispositif présentant un écran (6) qui protège d'un rayonnement thermique direct le contenu (1) à cuire, **caractérisé en ce que** l'écran est relié au plateau de préparation (4) de manière à être situé à distance au-dessus du creux de réception (5).

2. Dispositif selon la revendication 1, **caractérisé en ce que** le creux de réception (5) ne couvre qu'une partie du plateau de préparation (4), l'écran (6) laissant passer au moins une partie du rayonnement thermique direct vers la partie du plateau de préparation (4) qui n'est pas recouverte par le creux de réception (5).

3. Dispositif selon la revendication 2, **caractérisé en ce que** la partie du plateau de préparation (4) qui n'est pas recouverte par le creux de préparation (5) est en liaison conductrice de la chaleur avec le fond du creux de réception (5).

4. Dispositif selon l'une des revendications 1 à 3, **caractérisé en ce que** le fond du creux de préparation (5) est une partie du plateau de préparation (4).

5. Dispositif selon l'une des revendications 1 à 4, **caractérisé en ce que** le creux de réception (5) est configuré comme creux du plateau de préparation (4).

6. Appareil de cuisson d'oeufs doté d'un dispositif selon l'une des revendications 1 à 5 et d'une source de rayonnement thermique (2).

7. Appareil de cuisson d'oeufs selon la revendication 6, **caractérisé en ce que** la source de rayonnement thermique (2) rayonne du haut vers le bas et **en ce que** l'appareil de cuisson d'oeufs présente un entraînement de rotation (9) disposé dans le haut pour mettre en rotation le plateau de préparation (4) disposé dans le bas, en même temps que l'écran (6) qui est associé au creux de préparation (5) et qui est disposé entre lui et la source de rayonnement thermique (2).

8. Appareil de cuisson d'oeufs selon la revendication 6 ou 7, **caractérisé en ce que** le plateau de préparation (4) est rond, présente plusieurs creux de réception (5) disposés sur un parcours circulaire, l'écran (6) pouvant être relié à rotation solidaire au plateau de préparation (4) et présentant des ailettes (12) associées aux creux de réception (5) respectifs.

9. Appareil de cuisson d'oeufs selon la revendication 8, **caractérisé en ce que** les ailettes (12) sont rabattables.

10. Appareil de cuisson d'oeufs selon l'une des revendications 6 à 9, **caractérisé en ce que** le plateau de préparation (4) et l'écran (6) peuvent être enlevés.

11. Appareil de cuisson d'oeufs selon la revendication 10, **caractérisé en ce qu'**à l'entraînement de rotation (6) est associée une pièce d'accouplement par laquelle l'entraînement de rotation (9) peut entraîner, soit le plateau de préparation (4) et l'écran (6), soit un dispositif (13, 14) de retournement des oeufs (1).

12. Appareil de cuisson d'oeufs selon l'une des revendications 6 à 11, **caractérisé en ce que** l'écran (6) présente au moins une perforation ou au moins un oeillet pour permettre son enlèvement à l'aide d'un objet allongé.
